# EUROPÄISCHE PATENTANMELDUNG

(11) **EP 3 795 504 A1**
(43) Veröffentlichungstag der Anmeldung: **24.03.2021**
(21) Anmeldenummer: 20197254.4
(22) Anmeldetag: 21.09.2020
(51) Int. Cl.: B65G 37/02, B23Q 3/00, B23Q 7/14, B23Q 37/00

(54) **VORRICHTUNG UND VERFAHREN ZUR PRODUKTION VON KLEINTEILEN**

(30) Priorität: 19.09.2019 DE 102019125207
(71) Anmelder: Steckling, Markus, 84160 Frontenhausen (DE)
(72) Erfinder: Steckling, Markus, 84160 Frontenhausen (DE)
(74) Vertreter: Naeven, Ralf

(57) **Zusammenfassung**

Es wird eine Vorrichtung zur Produktion von Kleinteilen vorgeschlagen, umfassend
a) eine in einem Start- und Endbereich (2) angeordnete Vereinzelungsstation (8) zur automatischen Vereinzelung von Werkstücken (9), welche eingerichtet ist, jedem Werkstück (9) einem Werkstückhalter (7) zuzuordnen,
b) eine Mehrzahl von Trägerelementen (4) zur Aufnahme jeweils eines mit einem der Werkstücke (9) bestückten Werkstückhalters (7),
c) eine erste Fördereinheit (3) zum Transport der Trägerelemente (4),
d) eine zweite Fördereinheit (12), welche eingerichtet ist, die bestückten Werkstückhalter (7) vom jeweiligen Trägerelement (4) zu übernehmen und entlang einer ersten Bearbeitungsstrecke (13) zu transportieren,
e) eine dritte Fördereinheit (14) zur Übernahme der bestückten Werkstückhalter (7) von der zweiten Fördereinheit (12) und zum Weitertransport der bestückten Werkstückhalter (7), und
f) eine vierte Fördereinheit (17), welche eingerichtet ist, die bestückten Werkstückhalter von der dritten Fördereinheit zu übernehmen und entlang einer zweiten Bearbeitungsstrecke (18) in Richtung auf den Start- und Endbereich (2) zu transportieren.

Bei einem Verfahren zur Produktion von Kleinteilen werden Werkstücke (9) in einem vollautomatisierten Prozessablauf vereinzelt und jeweils auf einem Werkstückhalter fixiert, mit dem Werkstückhalter (7) einer Mehrzahl von Bearbeitungsstationen (19, 20) zugeführt und abschließend einer Entnahmeeinheit zugeführt.

## Beschreibung

Die Erfindung betrifft eine Vorrichtung und ein Verfahren zur Produktion von Kleinteilen, insbesondere von medizinischen Kleinteilen.

Bei der Konzeptionierung von Produktionsvorrichtungen und Produktionsverfahren stehen Automatisierbarkeit, Einsparung von Raum- und Zeitbedarf in der Regel im Vordergrund, um Kosten möglichst weitgehend zu minimieren.

Der hier betroffenen Erfindung liegt das technische Problem zugrunde, eine Vorrichtung und ein Verfahren zur Produktion von Kleinteilen zur Verfügung zu stellen, die hinsichtlich des Raum- und Zeitbedarfs und der Automatisierbarkeit optimiert sind.

Bei einer Vorrichtung zur Produktion von Kleinteilen wird dieses technische Problem mit den Merkmalen des Anspruchs 1 gelöst.

Vorgeschlagen wird demnach eine Vorrichtung, umfassend
a) eine in einem Start- und Endbereich angeordnete Vereinzelungsstation zur automatischen Vereinzelung von Werkstücken, welche eingerichtet ist, jedem Werkstück einem Werkstückhalter zuzuordnen,
b) eine Mehrzahl von Trägerelementen zur Aufnahme jeweils eines mit einem der Werkstücke bestückten Werkstückhalters,
c) eine erste Fördereinheit zum Transport der Trägerelemente,
d) eine zweite Fördereinheit, welche eingerichtet ist, die bestückten Werkstückhalter vom jeweiligen Trägerelement zu übernehmen und entlang einer ersten Bearbeitungsstrecke zu transportieren,
e) eine dritte Fördereinheit zur Übernahme der bestückten Werkstückhalter von der zweiten Fördereinheit und zum Weitertransport der bestückten Werkstückhalter, und
f) eine vierte Fördereinheit, welche eingerichtet ist, die bestückten Werkstückhalter von der dritten Fördereinheit zu übernehmen und entlang einer zweiten Bearbeitungsstrecke in Richtung auf den Start- und Endbereich zu transportieren.

Eine Besonderheit der Vorrichtung besteht darin, dass das zu bearbeitende Werkstück während des gesamten Produktionsprozesses von demselben Werkstückhalter getragen wird. Das Werkstück ist vorzugsweise im Werkstückhalter derart fixiert, dass das Werkstück während der Bearbeitung eine hinreichend stabile Position aufweist. Die Fixierung des Werkstückes am Werkstückhalter kann über ein Schnellverschlusssystem erfolgen, das eine maschinelle und automatisierte Bestückung der Werkstückhalter und/oder eine maschinelle und automatisierte Entnahme des Werkstückes aus dem Werkstückhalter ermöglicht. Unter einem Schnellverschlusssystem werden insbesondere solche Fixierungssysteme verstanden, bei denen ein erstes Objekt, welches in der vorliegenden Erfindung das Werkstück ist, mit einer oder mehreren einfachen Translations- und/oder Rotationsbewegung(en) an einem anderen Objekt, hier dem Werkstückhalter, fixiert werden kann. Derartige Schnellverschlusssystem sind z.B. für das Fixieren von Bohrern in Spannfuttersysteme von Bohrmaschinen oder aus Werkzeugwechselsystemen bekannt und können bei Bedarf für die hier gegebenen Zwecke angepasst werden. Am Werkstückhalter kann zum Beispiel eine Werkstückaufnahme mittels einer Drehbewegung und/oder einer Translationsbewegung mindestens eines am Werkstückhalter angebrachten Verschlusselements zur Aufnahme und Entnahme des Werkstückes geöffnet und zur Fixierung des Werkstückes geschlossen werden.

Der Werkstückhalter kann während des Produktionsprozesses mehrfach von unterschiedlichen Werkstückhalteraufnahmen, zum Beispiel zum Zwecke des Transportes zwischen den Bearbeitungsstationen oder zum Transport innerhalb der Bearbeitungsstationen, aufgenommen werden. Das Werkstück selbst wird somit nicht unmittelbar von einer Aufnahme zur anderen weitergereicht. Somit ist es auch möglich, die Vorrichtung für verschiedenartige Werkstücke zu nutzen. Hierfür kann erforderlichenfalls der Werkstückhalter für die Halterung der Werkstücke angepasst sein, während ein Teil des Werkstückhalters, der zur Aufnahme in den Werkstückhalteraufnahmen genutzt wird, normiert sein kann. Derselbe Werkstückhalter kann aber auch für verschiedene Werkstücke geeignet sein, zum Beispiel für verschiedene Varianten von medizinischen Kleinteilen, beispielsweise von Skalpellklingen.

Des Weiteren sind zwei Bearbeitungsstrecken vorgesehen, von denen eine vom Start- und Endbereich ausgeht und von denen eine andere wiederum zu diesem Start- und Endbereich hinführt. Die beiden Bearbeitungsstrecken können parallel zueinander ausgerichtet sein. Zwischen den Bearbeitungsstrecken sind platzsparend die Bearbeitungsstationen angeordnet.

Somit ist eine insgesamt sehr kompakte raumsparende Produktionsvorrichtung gegeben, die mit dem Konzept des im gesamten Produktionsprozess weitergereichten Werkstückhalters zudem Fehlerquellen beim Transport des Werkstückes kostenintensive Fehler vermeiden kann.

Vorteilhaft kann die erfindungsgemäße Vorrichtung so ausgebildet sein, dass die erste und zweite Bearbeitungsstrecke jeweils eine Mehrzahl von Bearbeitungsstationen aufweisen. Auf diese Weise können entlang jeder Bearbeitungsstrecke mehrere unterschiedliche Bearbeitungsschritte durchgeführt werden.

Insbesondere kann es vorteilhaft sein, wenn die erfindungsgemäße Vorrichtung so ausgebildet wird, dass die Bearbeitungsstationen in den Bearbeitungsstrecken austauschbare Module sind. Der modulare Aufbau bewirkt zum einen, dass im Falle technischer Probleme im Bereich einzelner Bearbeitungsstationen die problematischen Bearbeitungsstationen ausgetauscht werden können und somit eine eventuelle Produktionsunterbrechung in kurzer Zeit behoben werden kann. Zudem ist es möglich, durch Austausch der Bearbeitungsmodule den Produktionsprozess zu ändern und somit auf einfache Weise die Vorrichtung für die Produktion unterschiedlicher Werkstücke anzupassen.

Der modulare Aufbau der erfindungsgemäßen Vorrichtung kann auch derart sein, dass er für eine der Bearbeitungsstrecken oder für beide Bearbeitungsstrecken jeweils unterschiedliche Anzahlen von Bearbeitungsstationen erlaubt. Dieses kann in einer ersten Variante dadurch erreicht werden, dass die Länge der Bearbeitungsstrecken veränderbar ist, z.B. durch den Einbau bzw. Ausbau von Zwischenelementen, oder mittels eines Schienensystems, beispielsweise über Gleitschienen oder mit Linearlager, so dass aufgrund der veränderbaren Länge eine unterschiedliche Anzahl von Bearbeitungsstationen vorgesehen werden kann. In einer zweiten Variante können Bearbeitungsstationen, welche im eingebauten Zustand in Längsrichtung der Bearbeitungsstrecken jeweils eine bestimmte Ausdehnung aufweisen, durch eine geringere oder höhere Anzahl von anderen Bearbeitungsstationen ersetzt werden, welche in der Bearbeitungsstreckenlängsrichtung andere Ausdehnungen aufweisen. So können z.B. zur Anpassung an unterschiedliche Werkstücke zwei Bearbeitungsstationen ersetzt werden durch eine einzige oder umgekehrt. Des Weiteren kann in einer dritten Variante vorgesehen sein, dass zwischen zwei im Bearbeitungsprozess aufeinanderfolgenden Bearbeitungsstationen eine Lücke bleibt. Die vorgenannten Varianten, die unterschiedliche Anzahlen von Bearbeitungsstationen der Vorrichtung erlauben, können auch alternativ oder kumulativ genutzt werden.

Weiterhin kann die erfindungsgemäße Vorrichtung so ausgebildet sein, dass jede Bearbeitungsstation eine Datenverarbeitungseinheit aufweist, welche eingerichtet ist, dem Werkstück zugeordnete Daten zu empfangen, bei Bedarf zu bearbeiten und weiterzugeben. Prozessdaten werden je Bearbeitungsstation in eine Datenbank geschrieben und an der letzten Bearbeitungsstation mit einer Signatur auf dem Werkstück als Code geschrieben. Auf diese Weise kann der Produktionsprozess für jedes einzelne Werkstück nachverfolgt und vorzugsweise das fertige Werkstück als ohne Fehler im Produktionsprozess gekennzeichnet werden. Diese Vorgehensweise ermöglicht es außerdem, die einzelnen Prozessdaten je Werkstück in der Datenbank zu filtern. So können auch möglicherweise fehlerhafte Werkstücke, bei denen an einer der Bearbeitungsstationen ein Fehler festgestellt wurde, leicht identifiziert und als Ausschuss ausgesondert werden. Es wäre außerdem möglich, dass gleichzeitig in der Vorrichtung befindliche Werkstücke mittels der vorgegebenen Prozesssteuerung auf verschiedene Weise bearbeitet werden, so dass bewusst unterschiedlich gestaltete Werkstücke produziert werden. Des Weiteren ermöglicht der Einsatz der elektronischen Datenverarbeitung eine einfache Anpassung an eine geänderte Anzahl, Art oder Positionierung von Bearbeitungsstationen.

Die erfindungsgemäße Vorrichtung kann auch so ausgebildet sein, dass an mindestens einer der Bearbeitungsstation eine Transporteinrichtung vorgesehen ist, wobei die Transporteinrichtung eingerichtet ist, den bestückten Werkstückhalter von der zuständigen zweiten oder vierten Fördereinheit zu übernehmen, in der Bearbeitungsstation zu den jeweiligen Bearbeitungsschritten zu transportieren und den bestückten Werkstückhalter der zuständigen Fördereinheit zu übergeben. Somit kann der Transport in der zweiten oder vierten Fördereinheit auf den Transport in einer Richtung beschränkt werden, sodass die zweite und/oder vierte Förderereinheit lediglich eine Bewegungsachse oder zwei Bewegungsachsen aufweisen muss.

Weiterhin kann die erfindungsgemäße Vorrichtung eine im Start- und Endbereich angeordnete Entnahmeeinheit, beispielsweise mit einem Greifer, aufweisen, welche eingerichtet ist, das bearbeitete Werkstück vom zugehörigen Werkstückhalter zu entnehmen und weiterzuleiten. Das Weiterleiten kann ein einfaches Ablegen in einen Vorratsbehälter sein. Denkbar ist aber auch die Weitergabe an weitere Prozessschritte.

Insbesondere kann es vorteilhaft sein, die Vorrichtung zur Produktion von Skalpellen einzurichten. Skalpelle sind relativ filigrane Werkstücke an deren Genauigkeit und Qualität hohe Ansprüche gestellt werden und die in vielen verschiedenen Ausführungsvarianten benötigt werden. Die erfindungsgemäße Vorrichtung ist aber generell zur Bearbeitung von Kleinteilen, vorzugsweise von medizinischen Kleinteilen geeignet. Unter Kleinteilen werden bevorzugt solche Werkstücke verstanden, die in ihrer längsten Dimension maximal 15 cm lang sind.

Das vorgenannte technische Problem wird bei einem Verfahren zur Produktion von Kleinteilen mit den Merkmalen des Anspruchs 8 gelöst. Vorteilhafte Ausführungsformen ergeben sich aus den Unteransprüchen.

Mit der erfindungsgemäßen Vorrichtung und dem erfindungsgemäßen Verfahren können eine große Anzahl von Bearbeitungsschritten in eine sehr kompakte Vorrichtung integriert werden. Die Kompaktheit der Vorrichtung und ihr modularer Aufbau ermöglicht es auch, diese als eine mobile Vorrichtung auszubilden, die in ihrer Gesamtheit transportabel ist oder aber auf einfache Weise in Module aufgeteilt und wieder aufgebaut werden kann. Die dargestellte Verarbeitung von Prozessdaten bringt eine verbesserte Möglichkeit der Prozesskontrolle mit sich und ermöglicht insbesondere die gleichzeitige Produktion unterschiedlich gestalteter Werkstücke.

Im Folgenden wird eine beispielhafte Ausführungsform der erfindungsgemäßen Vorrichtung sowie des erfindungsgemäßen Verfahrens anhand von Figuren dargestellt.

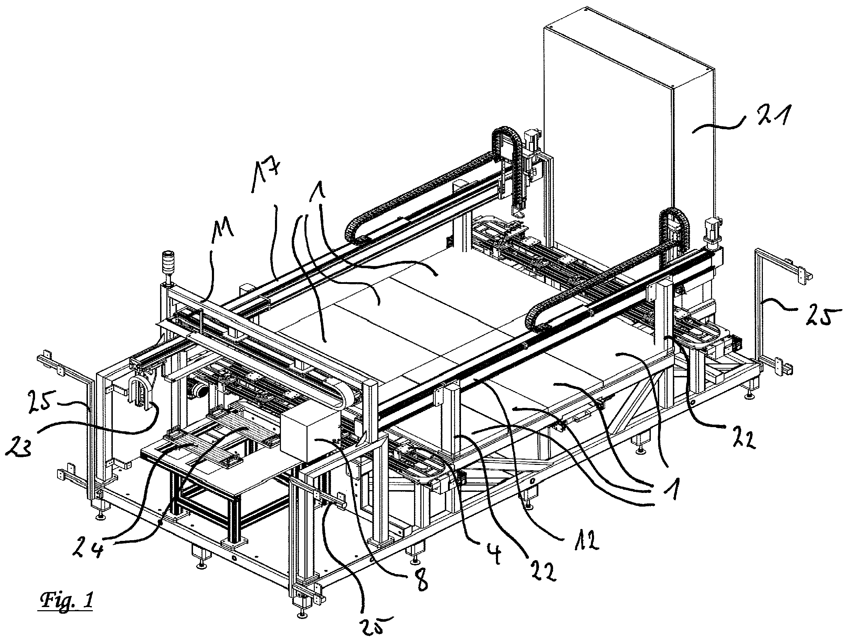

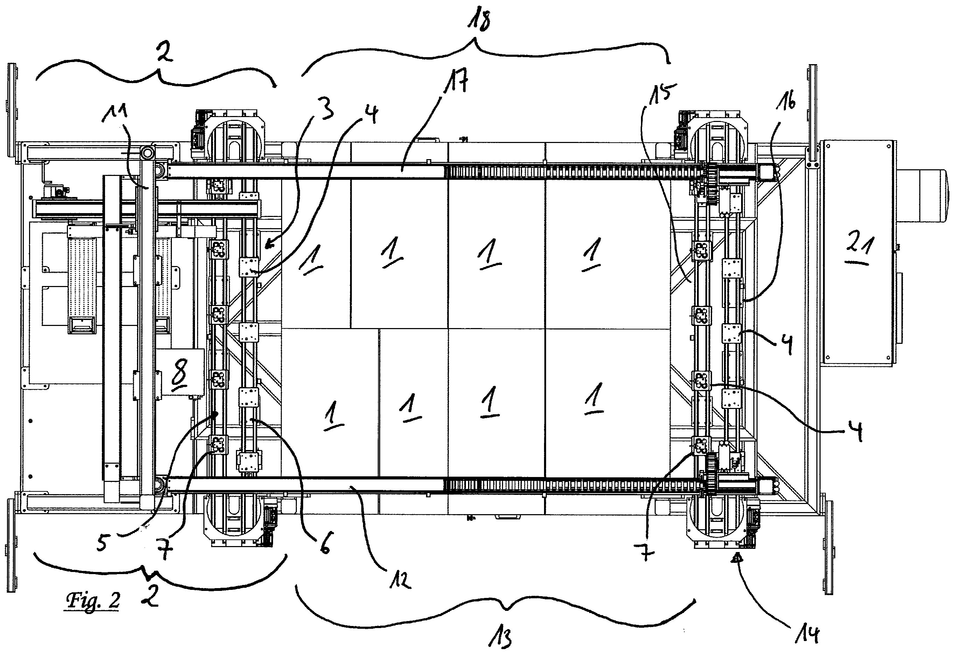

Fig. 1 zeigt eine erfindungsgemäße Vorrichtung in schräger Aufsicht, wobei zu Zwecken der besseren Übersicht Bearbeitungsstationen nicht dargestellt sind. Für den mittels einer in einem Schaltschrank 21 angeordneten Datenverarbeitungseinheit gesteuerten Betrieb würden die Bearbeitungsstationen anstelle von durch rechteckige Platten 1 dargestellten Platzhaltern montiert. Beispielhafte Bearbeitungsstationen werden weiter unten dargestellt. Fig. 2 zeigt die Vorrichtung in Aufsicht.

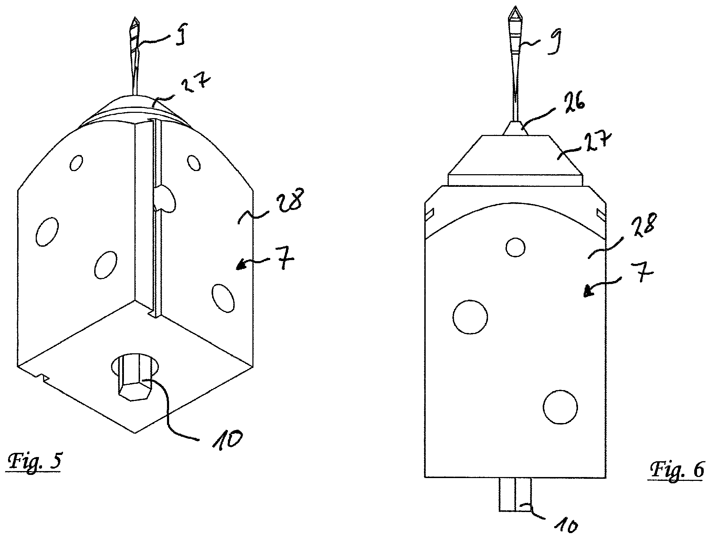

In einem Start- und Endbereich 2 ist eine erste Fördereinheit 3 angeordnet, mit der eine Mehrzahl von Trägerelementen 4 auf einer ersten Bahn 5 und einer zweiten Bahn 6 verfahren werden, wobei für die bessere Übersicht lediglich ein Trägerelement 4 mit einer Bezugszahl gekennzeichnet ist. Auf der ersten Bahn 5, deren Transportrichtung beispielhaft in der Bildebene zu Fig. 2 nach unten weist, tragen die Trägerelemente 4 jeweils einen Werkstückhalter 7. Mittels einer Vereinzelungsstation 8 werden die Werkstückhalter 7 jeweils mit einem in den Figuren 1 und 2 nicht dargestellten Werkstück 9 bestückt. Werkstückhalter 7 und Werkstück 9, hier beispielhaft in Form eines Skalpells, sind vergrößert in unterschiedlichen Ansichten in den Figuren 5 und 6 dargestellt.

In die Vereinzelungsstation 8 können Rohlinge der Werkstücke 9 manuell eingelegt werden. Beispielsweise durch Rüttelbewegungen und geeigneten Führungen werden die Werkstücke 9 vereinzelt und durch hier im Einzelnen nicht dargestellte Mittel auf den Werkstückhalter 7 aufgesteckt, sodass sie in der Darstellung der Vorrichtung nach Fig. 1 und 2 nach links ausgerichtet sind, hier allerdings wegen der geringen Größe kaum erkennbar. Die Vereinzelungsstation 8 ist über ein Portal 11 parallel und im Gleichlauf zur ersten Bahn 5 der ersten Fördereinheit 3 verfahrbar, sodass das Aufstecken der Werkstücke 9 auf die Werkstückhalter 7 (siehe Figuren 5 und 6) bei laufender erster Fördereinheit 3 erfolgen kann. Die erste Fördereinheit 3 kann insbesondere auch als Pufferspeicher für eine Vielzahl von Werkstückhaltern 7 dienen. Die Funktion als Pufferspeicher hat insbesondere den Vorteil, dass die Werkstückhalter 7 auch dann weiter mit Werkstücken 9 bestückt werden kann, wenn es im Produktionsprozess zu Stockungen kommt. Zudem kann ein hier nicht gesondert dargestellter Rohlingspeicher der Vereinzelungsstation 8 ohne Unterbrechung des Produktionsprozesses aufgefüllt werden.

Die erste Fördereinheit 3 bringt die mit jeweils einem Werkstück 9 bestückten Werkstückhalter 7 in Richtung auf eine zweite Fördereinheit 12, welche zweiachsig ausgebildet sein kann und an der hier nicht dargestellte Werkstückhalteraufnahmen angeordnet sind. Mit den Werkstückhalteraufnahmen werden die bestückten Werkstückhalter 7 von der ersten Fördereinheit 3 aufgenommen und zu den in den Figuren 1 und 2 nicht dargestellten Bearbeitungsstationen geführt. An den Bearbeitungsstationen werden in hier ebenfalls nicht dargestellter Weise wiederum die Werkstückhalter 7 von der zweiten Fördereinheit 12, die entlang von Schienen 22 vertikal verfahrbar ist, entnommen und den jeweiligen Bearbeitungsschritten dieser Bearbeitungsstationen zugeführt. Die entlang der zweiten Fördereinheit 12 angeordneten Bearbeitungsstationen bilden die erste Bearbeitungsstrecke 13. Nach der Bearbeitung werden die bestückten Werkstückhalter 7 von der zugehörigen Bearbeitungsstation jeweils wieder der zweiten Fördereinheit 12 zugeführt und von dieser weitertransportiert.

Nach Durchlaufen der ersten Bearbeitungsstrecke 13 werden die bestückten Werkstückhalter 7 einer dritten Fördereinheit 14 übergeben und dort auf Trägerelemente 4 platziert. Die dritte Fördereinheit 14 weist ebenso wie die erste Fördereinheit 3 eine erste Bahn 15 und eine zweite Bahn 16 auf, die in zueinander entgegengesetzte Richtungen laufen. Über die erste Bahn 15 werden die bestückten Werkstückhalter 7 von der zweiten Fördereinheit 13 zu einer vierten Fördereinheit 17 transportiert. Mit einer hier nicht explizit dargestellten Aufnahme werden die bestückten Werkstückhalter 7 von den Trägerelementen 4 der dritten Fördereinheit 14 entnommen und entlang von weiteren Bearbeitungsstationen (hier nicht im Einzelnen dargestellt) geführt, die eine zweite Bearbeitungsstrecke 18 bilden. Die von den Werkstückhaltern 7 befreiten Trägerelemente 4 werden von der zweiten Bahn 16 der dritten Fördereinheit 14 zurück in Richtung auf die zweite Fördereinheit 12 für eine erneute Bestückung gefahren.

Auf der zweiten Bearbeitungsstrecke 18 werden die bestückten Werkstückhalter 7 in zur ersten Bearbeitungsstrecke 13 analoger Weise von den Bearbeitungsstationen aufgenommen, um das Werkstück 9 dem jeweiligen Bearbeitungsschritt zuzuführen. Nach erfolgter Bearbeitung wird der Werkstückhalter 7 jeweils wieder der vierten Fördereinheit 17 zum Weitertransport übergeben.

Nach Durchlaufen der zweiten Bearbeitungsstrecke 18 erreicht der bestückte Werkstückhalter 7 mit inzwischen fertig bearbeitetem Werkstück 9 wieder den Start- und Endbereich 2, in der eine hier nicht dargestellte Empfangseinheit angeordnet ist, welche den bestückten Werkstückhalter 7 von der vierten Fördereinheit 17 entnimmt. Das fertig produzierte Werkstück 9 wird mittelseiner Entnahmeeinheit, hier in Form eines Greifers 23, vom Werkstückhalter 7 entfernt und in einem hier nicht dargestellten Behälter abgelegt, der optional von einem Ablagetisch 24 getragen ist. Der vom Werkstück 9 befreite Werkstückhalter 7 wird von der nicht dargestellten Empfangseinheit einem freien Trägerelement 4 der ersten Fördereinheit 3 zuführt.

Aus Sicherheitsgründen sind seitlich an der Anlage Lichtschrankenhalter 25 angebracht. Signale hier nicht dargestellter Lichtschranken sorgen im Falle eines Betretens des Sicherheitsbereichs für eine Unterbrechung des Produktionsprozesses.

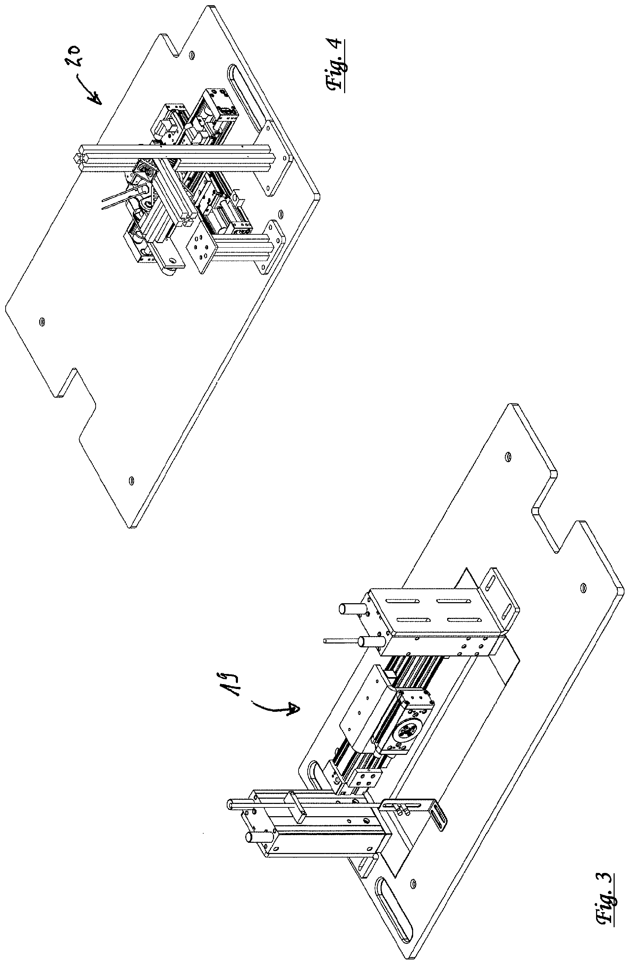

Die Figuren 3 und 4 zeigen beispielhaft in einer schrägen Aufsicht eine erste Bearbeitungsstation 19 und eine zweite Bearbeitungsstation 20, die in einer Vorrichtung gemäß Fig. 1 und 2 eingesetzt werden können. Die Bearbeitungsstationen, die an sich bekannte Bearbeitungen durchführen, sind in den Fig. 3 und 4 beispielhaft und nicht in allen Einzelheiten dargestellt und bedürfen keiner detaillierten Beschreibung. Hierbei kann es sich z.B. um Schleifstationen für ein Bandschleifen oder ein Tellerschleifen handeln.

In den Figuren 5 und 6 ist ein beispielhafter Werkstückhalter 7 mit einem in einer Werkstückaufnahme 26 (nur in Fig. 6 gezeigt) eingespannten Werkstück 9 dargestellt. Die Werkstückaufnahme 26 kann Teil eines Schnellverschlusssystems sein, welches ein automatisiertes und maschinelles Einspannen und/oder eine automatisierte und maschinelle Entnahme des Werkstückes 9 erlaubt. So kann z.B. vorgesehen sein, dass eine Translationsbewegung und/oder eine Rotationsbewegung eines Verschlusselements 27 relativ zu einem Hauptkörper 28 und/oder einem anderen hier nicht dargestellten Bestandteil des Werkstückhalters 7 zum Öffnen oder Verschließen der Werkstückaufnahme 26 führt. Derartige Relativbewegungen können maschinell durchgeführt werden. Geeignete Schnellverschlusssysteme können auch einen anderen Aufbau aufweisen. Die genaue Funktionsweise des Schnellverschlusssystems braucht hier nicht dargestellt zu werden, da geeignete Varianten im Stand der Technik anderer Technikbereiche, wie z.B. bei Bohr- oder Schraubmaschinen oder Werkzeugwechselsystemen, bekannt sind und für die hier betrachtete Anwendung angepasst werden können. Der Werkstückhalter 7 weist einen Steckbolzen 10 auf, der zum Einstecken in eine geeignete Werkstückhalteraufnahme vorgesehen ist.

Mögliche Bearbeitungsstationen, vorzugsweise für Skalpelle als Werkstücke, können zum Beispiel eine Presse sein, eine Bandschleif-Station eine Passivier-Station, eine Konturschleif-Station, eine Feinschleif-Station, eine Bad-Station, zum Beispiel mit einem Wasserbad, und eine Biegestation.

### Bezugszeichenliste

- 1: Platzhalter
- 2: Start- und Endbereich
- 3: Erste Fördereinheit
- 4: Trägerelement
- 5: Erste Bahn
- 6: Zweite Bahn
- 7: Werkstückhalter
- 8: Vereinzelungsstation
- 9: Werkstück
- 10: Steckbolzen
- 11: Portal
- 12: Zweite Fördereinheit
- 13: Erste Bearbeitungsstrecke
- 14: dritte Fördereinheit
- 15: Erste Bahn
- 16: Zweite Bahn
- 17: Vierte Fördereinheit
- 18: Zweite Bearbeitungsstrecke
- 19: Erste Bearbeitungsstation
- 20: Zweite Bearbeitungsstation
- 21: Schaltschrank
- 22: Schiene
- 23: Greifer
- 24: Ablagetisch
- 25: Lichtschrankenhalter
- 26: Werkstückaufnahme
- 27: Verschlusselement
- 28: Hauptkörper

## Patentansprüche

1. Vorrichtung zur Produktion von Kleinteilen, umfassend
a) eine in einem Start- und Endbereich (2) angeordnete Vereinzelungsstation (8) zur automatischen Vereinzelung von Werkstücken (9), welche eingerichtet ist, jedem Werkstück (9) einem Werkstückhalter (7) zuzuordnen,
b) eine Mehrzahl von Trägerelementen (4) zur Aufnahme jeweils eines mit einem der Werkstücke (9) bestückten Werkstückhalters (7),
c) eine erste Fördereinheit (3) zum Transport der Trägerelemente (4),
d) eine zweite Fördereinheit (12), welche eingerichtet ist, die bestückten Werkstückhalter (7) vom jeweiligen Trägerelement (4) zu übernehmen und entlang einer ersten Bearbeitungsstrecke (13) zu transportieren,
e) eine dritte Fördereinheit (14) zur Übernahme der bestückten Werkstückhalter (7) von der zweiten Fördereinheit (12) und zum Weitertransport der bestückten Werkstückhalter (7), und
f) eine vierte Fördereinheit (17), welche eingerichtet ist, die bestückten Werkstückhalter von der dritten Fördereinheit zu übernehmen und entlang einer zweiten Bearbeitungsstrecke (18) in Richtung auf den Start- und Endbereich (2) zu transportieren.

2. Vorrichtung nach Anspruch 1, **dadurch gekennzeichnet, dass** die erste und die zweite Bearbeitungsstrecke (13, 18) jeweils eine Mehrzahl von Bearbeitungsstationen (19, 20) aufweist.

3. Vorrichtung nach Anspruch 1 oder 2, **dadurch gekennzeichnet, dass** die Bearbeitungsstationen (19, 20) in den Bearbeitungsstrecken (13, 18) austauschbare Module sind.

4. Vorrichtung nach einem der vorhergehenden Ansprüche, **dadurch gekennzeichnet, dass** jede Bearbeitungsstation (19, 20) eine Datenverarbeitungseinheit aufweist, welche eingerichtet ist, dem Werkzeug (9) zugeordnete Daten zu empfangen, bei Bedarf zu verarbeiten und weiterzugeben.

5. Vorrichtung nach einem der vorhergehenden Ansprüche, **dadurch gekennzeichnet, dass** an mindestens einer der Bearbeitungsstationen (19, 20) eine Transporteinrichtung vorgesehen ist, wobei die Transporteinrichtung eingerichtet ist, den bestückten Werkzeughalter (7) von der zuständigen zweiten oder vierten Fördereinheit (12, 17) zu übernehmen, in der Bearbeitungsstation (19, 20) zu den jeweiligen Bearbeitungsschritten zu transportieren und den bestückten Werkzeughalter (7) der zuständigen Fördereinheit (12, 17) zu übergeben.

6. Vorrichtung nach einem der vorhergehenden Ansprüche, **gekennzeichnet durch** eine im Start- und Endbereich (2) angeordnete Entnahmeeinheit, welche eingerichtet ist, das bearbeitete Werkstück (9) vom zugehörigen Werkzeughalter (7) zu entnehmen und weiterzuleiten.

7. Vorrichtung nach einem der vorhergehenden Ansprüche, **dadurch gekennzeichnet, dass** die Vorrichtung zur Produktion von Kleinteilen, insbesondere von Skalpellen eingerichtet ist.

8. Verfahren zur Produktion von Kleinteilen, bei dem
Werkstücke (9) in einem vollautomatisierten Prozessablauf
a) vereinzelt und jeweils auf einem Werkstückhalter (7) fixiert werden,
b) mit dem Werkstückhalter (7) einer Mehrzahl von Bearbeitungsstationen (19, 20) zugeführt werden und
c) abschließend einer Entnahmeeinheit zugeführt werden.

9. Verfahren nach Anspruch 8, **dadurch gekennzeichnet, dass** zu jedem der bearbeiteten Werkstücke (9) an jeder Bearbeitungsstation (19, 20) Daten zum durchgeführten Bearbeitungsschritt generiert und dem bearbeiteten Werkstück (9) zugeordnet werden.

10. Verfahren nach Anspruch 8 oder 9, **dadurch gekennzeichnet, dass** die mit jeweils einem der Werkstücke (9) bestückten Werkzeughalter (7) entlang mindestens zweier, jeweils eine Teilanzahl der Bearbeitungsstationen (19, 20) aufweisender Bearbeitungsstrecken (13, 18)geführt werden, wobei eine erste der Bearbeitungsstrecken (13, 18) an einem Start- und Endbereich (2) beginnt und eine letzte der Bearbeitungsstrecken (13, 18) an demselben Start- und Endbereich (2) endet.

11. Verfahren nach einem der Ansprüche 8 bis 10, **dadurch gekennzeichnet, dass** Skalpelle produziert werden.
